# EUROPEAN PATENT SPECIFICATION

(11) **EP 1 234 496 B1**
(45) Date of publication and mention of the grant of the patent: **11.08.2004**
(21) Application number: 02077022.8
(22) Date of filing: 15.05.1995
(51) Int. Cl.: A01J 7/02, A01J 5/08, A01J 5/017

(54) **A method of cleaning teat cups and an implement for milking animals**
Verfahren zum Reinigen von Melkbechern und Vorrichtung zum Melken von Tieren
Procédé pour nettoyer les manchons trayeurs et dispositif pour la traite d'animaux

(30) Priority: 19.05.1994 NL 9400822; 23.02.1995 NL 9500347
(43) Date of publication of application: 28.08.2002
(62) Divisional of application: 00200059.4
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 385 539
- EP-A- 0 536 836
- FR-A- 2 413 850
- DATABASE WPI Week 8912 Derwent Publications Ltd., London, GB; AN 89086312 XP002231707 & DD 261 300 A (FORSCH MECH LANDWIR)

## Description

The invention relates to a method of cleaning the teat cups.

It is known to clean the teat cups together with the milking circuit connected thereto by connecting the teat cups to spraying elements, whilst a cleaning liquid is sucked from a storage vessel and is passed via the spraying elements through the teat cups, the milk lines connected thereto and a milk jar, whereafter the cleaning liquid is pumped back to the storage vessel via a return line connected to the discharge line of the milk jar. Such a method is disclosed in European patent application no. 0 385 539. Cleaning the teat cups and the milking circuit connected thereto is effected once in every one to three days. It is, however, important to clean in particular the teat cup more frequently; when e.g. a cow infected by mastitis is milked, there is a real risk that, by milking a subsequent animal immediately thereafter, the infection is transferred to this subsequent animal via the teat cup. Cross-infection then occurs.

According to the invention, this method is characterized by the features of the characterizing part of claim 1. Using the prior art spray elements or optionally specially designed spray elements, as described hereinafter, a cleaning liquid can be brought into the teat cups, whilst, by closing these cups near their lower ends, the cleaning liquid is forced to leave the teat cups via the open ends. Such a simplified and reduced cleaning procedure can be performed each time after an animal has been milked. According to the invention, the cleaning liquid can be fed into the teat chamber by inserting a tubular element, having one or a plurality of apertures, into the teat chamber. The apertures are, preferably, provided in such a position in this tubular element that a cleaning liquid is fed into the teat chamber at a distance from the upper end of the teat cup which exceeds the normally to be expected insertion depth of the teats of the animals to be milked. Acting thus, the cleaning liquid can be pressed along the teat cup lining of the teat cup to the open end of the teat cup and this cleaning liquid can be discharged directly without arriving in the milk circuit connected to the teat cup.

Closing the discharge from the teat chamber to the milk line can be effected in several different manners. According to the invention, that end of the said tubular element to be inserted into a teat cup can be of such a shape that, by applying an underpressure in the milk line connected to the teat cup, the discharge from the teat chamber to the milk line is shut off by that portion of the teat cup lining that is located under said end of the tubular element and the cleaning liquid fed through the tubular element is forced to the open end of the teat cup between the outer wall of the tubular element and that portion of the teat cup lining that contacts the teats. More in particular when the cleaning liquid contains a special cleaning and/or disinfecting agent and no further measures, such as a final washing, are taken, it is of importance to prevent the cleaning liquid from entering the milk circuit connected to the teat cup.

A further manner of inhibiting the discharge from the teat chamber to the milk line can be realized by utilizing a teat cup of a specific design. For when a teat cup is used which has two chambers which are separated from each other and located around the teat chamber, whilst an alternating underpressure can be applied in one or in both chambers, then the teat chamber can be shut off by a means of difference between the pressure in the milk line connected to the teat cup and the pressure in the chamber located nearest thereto. In such a situation, use can be made of both the above-described tubular element and of the customary spray elements which spray a cleaning liquid into the teat cup from above.

Yet another manner of shutting-off the discharge from the teat chamber to the milk line can be realized by producing an overpressure in the milk line connected to the teat cup; the cleaning liquid sprayed into the teat chamber is then forced by this overpressure to the open end of the teat cup. The teat cup is then, as it were, shut off by means of an air lock.

As a cleaning liquid, use can be made of heated water, preferably having a temperature above 70°C and more particularly above 80°C, in order to kill the microbes present in the teat cup, as well as of a cleaning liquid constituted by warm water, having a temperature of preferably 30 to 50°C, to which a cleaning agent and/or a disinfecting agent has been added. In the latter case, after the cleaning operation by means of this liquid, the teat cup must be subjected to a final wash via the tubular element, preferably with normal water from the mains supply. After a cleaning liquid has been forced through the chamber between the outer wall of the tubular element and that portion of the teat cup lining that contacts the teats, it is of importance that air is blown via the tubular element into the teat cup chamber in order to dry the teat cup lining.

The method followed here is more in particular of importance when it is integrated into a fully automated milking machine. The method is, therefore, further characterized in that the teat cups can be connected to a relevant tubular element by moving a robot arm, which functions as a carrier for the teat cups, towards a carrier for the tubular elements or by moving a robot arm, which acts as a carrier for the tubular elements, towards a carrier for the teat cups.

The invention also relates to an implement for automatically milking animals, such as cows, comprising a robot having an arm which acts as a support for the teat cups, with the aid of which robot the teat cups can automatically be connected to the teats of the animals to be milked, as well as a washing member with spray heads for spraying a cleaning liquid into the teat cups. Such an implement is known from EP-A-0 536 836. This implement is then characterized in that, between the teat cup wall and the teat cup lining, a teat cup includes two mutually separated chambers located around the teat chamber, it being possible to apply an alternating underpressure in one or in both chambers, whilst, when only the teat chamber of the teat cup is to be cleaned, a difference can be produced between the pressure in the milk line connected to the teat cup and the pressure in the chamber located nearest thereto, this difference being such that the discharge from the teat chamber to the milk line is shut off.

For a better understanding of the invention and to show how the same may be carried into effect, reference will now be made, by way of example, to the accompanying drawings, in which:
Figure 1 is an elevational view of an implement for automatically milking animals, in which the cleaning member of the invention is provided;
Figure 2 is a plan view of a portion of the implement shown in Figure 1, the cleaning member being shown in a plan view;

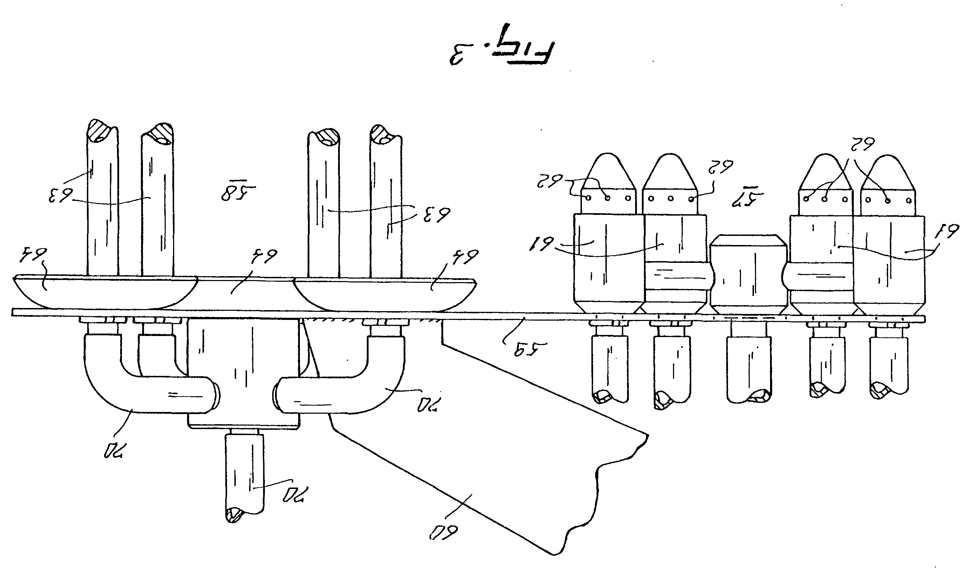

Figure 3 is a partial side view of the cleaning member combined with a washing member for the milk line system;
Figure 4 is a cross-sectional view of a cleaning member portion connected to a teat cup;
Figure 5 is a cross-sectional view of a teat cup portion and an alternative design of the cleaning member, and
Figure 6 is a cross-sectional view of a washing member portion connected to an alternative teat cup.

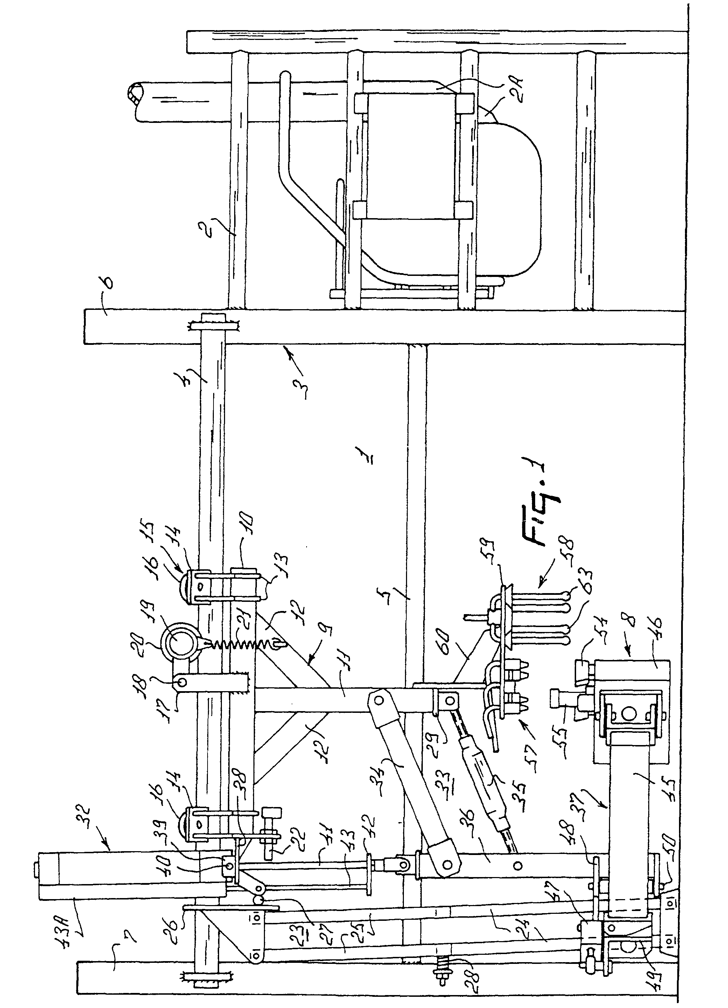

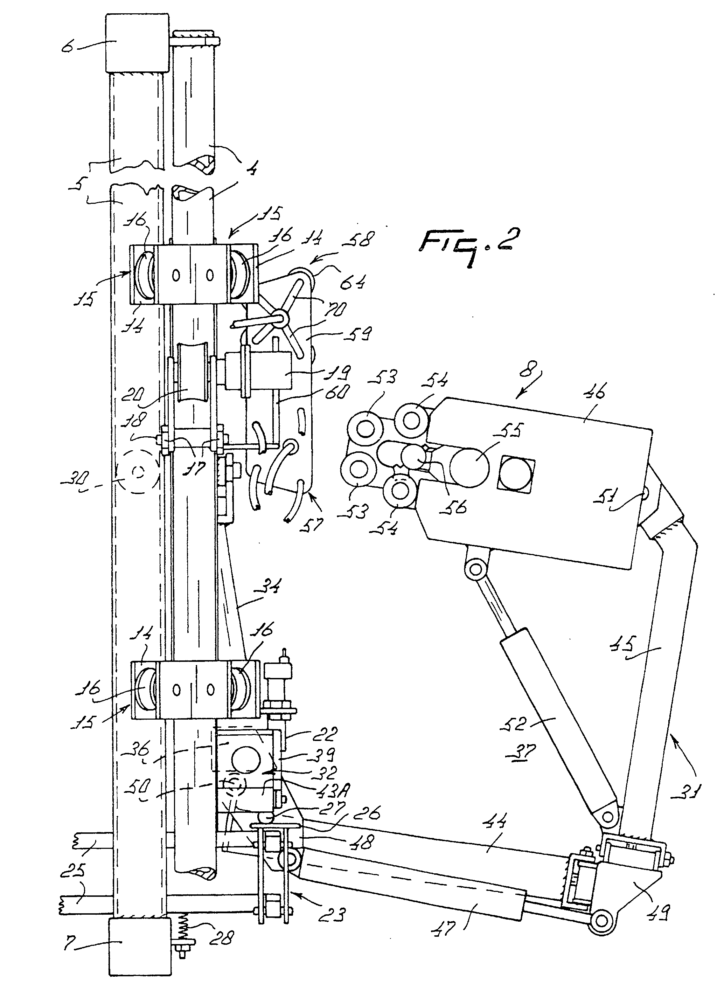

The implement, such as it is shown in Figures 1 and 2, includes a milking parlour 1 surrounded by a railing 2 which allows the animal a limited freedom of motion and is fitted with an automatically operating feeding implement 2A. The animal can enter the milking parlour from the side at the rear, whilst the animal can leave same again from this side at the front. Since the front end of the milking parlour includes a feeding implement, the cow will advance sufficiently far to arrive in a position in which she can easily be milked. At the longitudinal side of the milking parlour other than the one wherein its entrance and exit are located, there is a rigidly arranged frame 3, which is part of the railing 2, which frame 3 includes a first frame portion 4 and a second frame portion 5. The first frame portion 4 extends parallel to and is predominantly located above the second frame portion 5. In this situation, the first frame portion 4 is rigidly attached to the outer side of two vertical pillars 6 and 7, which are part of the railing 2, while the second frame portion 5 is rigidly connected between these two pillars 6 and 7. Movably connected to the first frame portion 4 there is a milking robot 8 for automatically connecting teat cups to the teats of the animals to be milked and disconnecting same therefrom, whilst this milking robot bears against the second frame portion 5, which is further disposed at such a height that arms of the milking robot 8 can be moved, passing underneath this second frame portion, to under the cow present in the milking parlour. The milking robot 8 includes a carrier frame 9 for the further portions of the milking robot. By implementing the upper frame portion 4 as a rail, the carrier frame 9 and consequently the entire milking robot 8 can easily be moved along this frame portion. The carrier frame 9 includes a beam 10 which extends predominantly parallel to the first frame portion 4, perpendicularly thereto a beam 11 which extends vertically and is rigidly connected thereto and two struts 12. Pairs of supporting elements 13 are disposed near the ends of the beam 10. Attached at an angle of approximately 45° to each pair of supporting elements 13, via supporting plates 14 rigidly connected thereto, there are two rollers 16 forming a roller element pair 15, the arrangement being such that the carrier frame 9 is suspended from the upper frame portion 4 in such a manner that it can easily be moved therealong underneath same. A carrier 17 is disposed at either side on the beam 10 of the carrier frame 9. A motor 19, which is capable of moving about a pivot shaft 18, is connected to these carriers. This motor 19 drives a roller 20 which preferably has a rubber surface, this roller being pushed against the upper frame portion 4 by means of a spring member 21. As the spring member 21 acts between the motor 19 and the carrier frame 9, the roller 20 to be driven by the motor 19 is kept in the position in which it pushes against the upper frame portion 4, so that, when the motor is energized, it is moved lengthwise along the upper frame portion 4 and consequently also the entire carrier frame 9. To the supporting element 13 that, taken in the direction of the milking parlour, is the rearmost one there is attached a sensor 22, which may comprise a laser. With the aid of this sensor 22, it becomes possible to transfer the milking robot from a resting position in the longitudinal direction of the milking parlour to a starting position, in which the arms of the milking robot are moved to under the animal present in the milking parlour, and to track the movements of the animal in the longitudinal direction of the milking parlour. To that end, the sensor 22 co-operates with a supporting element 23 which can move along the hind side of the animal. With the aid of a rod system, which in the present structure is in the form of a four-bar linkage, more specifically a parallelogram construction 24, this supporting element 23 is mounted on the milking parlour floor in such a manner that it is pivotal thereto. By means of two rods 25, the supporting element 23 is fitted with a plate 26 which is attached in such a manner that it extends laterally outside the frame portions 4 and 5 and is arrayed such that it can reflect a signal transmitted by the sensor 22. After the reflected signal has been received by the sensor 22, the sensor supplies a control signal which is a measure of the actual, i.e. the measured, distance between the plate 26 and the sensor 22, with the aid of which control signal the motor 19 can be driven, whilst the milking robot 8 is driven in the longitudinal direction of the milking parlour in such a manner that the distance between the plate 26 and the sensor 22 is adjusted to a preset value or is kept in this position, respectively. When the milking robot 8 is in its resting position, then it has been moved to a position which is as far as possible to the rear relative to the frame portions 4 and 5, whilst the milking robot 8 pushes via a contact element 27 against the plate 26 and thus keeps the supporting element 23 in a position in which it is pushed as far to the rear as possible. In other words, the supporting element 23 is locked by the milking robot 8 when the latter is in its resting position. When the milking robot is transferred from this resting position in the longitudinal direction of the milking parlour to the starting position, in which the arms of the milking robot are moved to under the animal present in the milking parlour, then the supporting element 23 is unlocked and pushed by means of a spring 28 arranged between the parallelogram structure 24 and the railing 2, under spring pressure, against the hind side of the cow then present in the milking parlour. When the cow moves forwards or rearwards, then the supporting element 23, in response to the pressure of the spring 28, will always remain in the position in which it pushes against the hind side of the animal, so that the position of the plate 26 defines the position of the animal in the milking parlour in the lengthwise direction and so that, by means of the sensor 22, whilst the distance in the longitudinal direction between the plate 26 and the sensor 22 is kept constant, the milking robot can track the movements of the cow in the longitudinal direction of the milking parlour. In the present design, the beam 11 of the carrier frame 9 extends downwardly in the vertical direction to just under the second frame portion 5. At the bottom side of this beam 1 there is a horizontal, rearwardly extending strip 29, on which a freely rotatable roller element 30 is accommodated. The lower frame portion 5 is constituted by a rail and more in particular by a rail formed by a U-beam, the freely rotatable roller element 30 having been disposed such that it is movable between the two upright edges of the U-beam. Thus, the milking robot 8 bears against the lower frame portion 5 and, when the milking robot 8 is moved along the first frame portion 4 by means of the motor, it can then easily move along the second frame portion 5. In addition to the carrier frame 9, the milking robot includes a robot arm structure 31 which is movable in a predominantly vertical direction relative to the carrier frame 9 by means of an operating cylinder 32. The robot arm structure 31 is movably connected to the carrier frame 9 via a four-bar linkage 33. In the embodiment shown, the upper arm 34 of this four-bar linkage 33 is of a fixed length, whereas the lower arm 35 thereof has an adjustable length. Herewith the orientation of the robot arm structure 31 can be adjusted to a limited extent. The robot arm structure 31 includes a predominantly vertical robot arm 36, as well as robot arms 37 which are movable in a predominantly horizontal plane. Via the four-bar linkage 33 the robot arm 36 is connected to the beam 11 of the carrier frame 9. The operating cylinder 32 is operative between the carrier frame 9 and the robot arm 36. Since the orientation of the robot arm 36 is adjustable to a limited extent with the aid of the lower arm 35 of the four-bar linkage 33, the position of the point at which the operating cylinder 32 acts on the robot arm 36 is spatially not defined definitely. For this reason the housing of the operating cylinder 32 is disposed in such a manner on a carrier plate 38 connected to the beam 10 of the carrier frame 9 that it is at least capable of pivoting to a limited extent. On this carrier plate 38 there are provided supports 39, between which the housing of the operating cylinder 32 can move about a pivot shaft 40. In the present embodiment, the operating cylinder is designed as a servo-pneumatic positioning cylinder. This means that the lower end of the piston rod 41 is provided by means of a plate 42 connected rigidly thereto with a position feedback rod 43, with the aid of which a signal indicating the position of the piston rod relative to the cylinder housing is derived in the portion 43A of the operating cylinder by a potentiometer, whilst with the aid of this signal supplied by this potentiometer the position of the piston rod 41 relative to the cylinder housing can be adjusted to a preset position. In addition, the operating cylinder 32 includes an overload protection, whereby, as soon as the animal present in the milking parlour exercises a pressure on the robot arm construction 31, e.g. by kicking it with her leg, the robot arm construction 31 can be moved to its lowest position. Figure 2 shows the milking robot 8 in its resting position, in which it is in its most rearward position relative to the frame portions 4 and 5 and in which the robot arm construction 31 has been moved to its lowest possible position near the soil. As soon as the cow is present in the milking parlour and the milking procedure is to be started, the milking robot 8 is moved from its resting position to the starting position, i.e. to the position in which the arms of the milking robot 8 can be moved to under the cow.

In the present embodiment, the milking robot includes for this purpose arms 44, 45 and 46. The arms 44 and 45 are arranged at a fixed angle of 90° relative to each other. The arms 44 and 45 are therefore moved jointly, more specifically by an operating cylinder 47 disposed between a supporting plate 48 attached to the robot arm 36 and a connecting member 49 disposed between the two arms 44 and 45. The two arms 44 and 45 are pivotal about a predominantly vertical pivot shaft 50 between the supporting plate 48 and a supporting plate 50, the latter also being rigidly connected to the robot arm 36, more in particular to the lower end thereof. Relative to the arm 45, the arm 46 is pivotal about a predominantly vertical pivot shaft 51 and is pivoted with respect thereto by means of an operating cylinder 52 disposed between the arm 46 and that end of the arm 45 that is located near the connecting member 49. Near the end of the arm 46 there are arranged the teat cups 53 and 54 to be connected to the teats of the cow. Between the two teat cups 54 there is provided a slide, which is movable along the arm 46 and on which there is present a sensor 55, which by a sector-by-sector scanning motion can accurately determine the position of the teats, so that by means of the computer the operating cylinders 32, 47 and 52 can be controlled in such a manner that the teat cups can be connected to the teats in the proper manner. After the robot arms 44 - 46 have been moved to under the cow, these arms are in a relatively low position, in which the sensor 55 will not yet detect teats. Using the operating cylinder 32, the robot arms 44 - 46 are now moved upwards stepwise until the sensor 55 detects one or more of the animal's teats. In case during this upward motion the robot arms 44 - 46 should have been moved upwards to such a height that the upper edge of the sensor 55 pushes against the cow's abdomen, then, by means of a switch 56 located at the upper side of the sensor 55, the robot arms are caused to move downwards again, whereafter with the aid of the sensor 55 the determination of the position of the teats can be repeated, the robot arms being gradually moved upwards again in the process.

The implement, such as it has been described in the foregoing, further includes a washing member 57 for cleaning the teat cups 53 and 54 and optionally the milk circuit connected thereto and a cleaning member 58 for cleaning only the teat chamber of the teat cups. The washing member 57 as well as the cleaning member 58 are connected to a carrier 59 which is connected to the beam 11 via a support 60.

The implement, such as it is shown in Figures 1 and 2, has been provided in customary manner with a (non-shown) washing circuit. This washing circuit is constituted by a washing liquid storage vessel, a washing liquid supply line connected thereto, which leads to the washing member 57, while the washing circuit is furthermore constituted by the automatic milking implement portions which during washing are connected to the washing member, i.e. the teat cups 53 and 54, the milk lines connected thereto and a milk jar in which these milk lines end. The discharge means from the milk jar is equipped in customary manner with a pump and a valve for transferring the milk during milking to a milk tank and for feeding back the washing liquid during washing of the teat cups, the milk lines connected thereto and the milk jar to the washing liquid storage vessel. Such a washing circuit is disclosed in European patent application no. 0 385 539. The washing member 57 is furthermore disclosed in European patent application no. 0 536 836. The washing member includes four spray heads 61, each of which has, located near its lower end which during washing is inserted into the teat cups, preferably radially directed outflow apertures 62, through which a washing liquid can be fed into the teat cups. Because of the underpressure in the milk jar and the milk lines connected to the teat cups, the washing liquid is sucked from the liquid storage vessel and is sprayed into the teat cups via the spray heads and is thereafter fed back to the washing liquid storage vessel by means of a pump incorporated in the discharge line of the milk jar. In this known per se manner, the teat cups and the milk lines connected thereto and the milk jar are cleaned; this cleaning operation preferably takes place once in one or three days.

As has already been described in the opening paragraph of the description, it may be advantageous to clean only the teat cups, each time after an animal has been milked, in order to reduce the risk of cross-infection. Cleaning of the teat cups immediately after milking may also be done selectively for specific animals. In particular when during milking an increased milk conductivity value has been established by the milk conductivity sensors, which may be an indication of a latent mastitis, it is desirable for the teat cups to be cleaned immediately after milking. The cleaning member 58 serves this purpose. This cleaning member 58 comprises four tubular elements 63. For the purpose of cleaning only the teat cups, these cups are placed with the aid of the milking robot 8 around the tubular elements 63, more in particular so far that between the open ends of the teat cups and shielding elements 64, provided at the upper side of the tubular elements 63, a narrow outflow aperture 65 is created. Near their lower ends, the tubular elements 63 have preferably radial outflow apertures 66. These outflow apertures 66 end in the teat chamber of a teat cup placed around the tubular element 63, more particularly at such a distance from the open end of the teat cup that, when a teat would have been inserted in the teat cup, the insertion depth of this teat is less far than the region in which the outflow apertures 66 end in the teat chamber. The lower end 67 of the tubular element 63 is of such a shape that, when an underpressure is produced in the milk line 68 connected to the teat cup, the teat cup lining 69, which consists of a flexible material, is sucked inwardly, more particularly in such a manner that the discharge from the teat chamber to the milk line connected to the teat cup is shut off below the lower end 67 of the tubular element 63. At the upper end, the tubular element 63 is connected to a washing liquid supply line 70. When solely the teat cup, i.e. the teat cup lining 69, is to be cleaned, then, with the aid of the milking robot 8, the relevant teat cup is placed around a tubular element 63, whereafter, by producing an underpressure in the milk line 68 connected to the teat cup, air is exhausted, which has as a result that the teat cup is shut off near its lower end, i.e. below the end 67 of the tubular element 63, so that, when cleaning liquid is passed through the tubular element 63 via the cleaning liquid supply line 70, this liquid is forced up via the outflow apertures 66 and is discharged to the environment through the outflow aperture 65 via the open end of the teat cup and the relatively narrow space between the upper edge of the teat cup and the shielding element 64. This cleaning operation can be performed with the aid of hot water having a temperature of over 70°C, preferably over 80°C, so that the microbes accumulated on the interior side of the teat cup on the teat cup lining, are killed. Alternatively, a cleaning liquid, formed by water having a temperature of between 30 and 50°C, to which a cleaning agent and/or a disinfectant has been added, can be used. In that case, after cleaning of the teat cup by means of the said cleaning liquid, the teat cup needs to be washed finally, using pure tap water, whereafter the teat cup is dried by blowing air through the line 70 and the tubular element 63.

Apart from the washing member 57, also the cleaning member 58 can be used for cleaning, e.g. once in one to three days, both the teat cup and the milk circuit connected thereto. The tubular element 63 then does not only include a channel 71, through which a cleaning liquid is fed into the teat chamber, but also a second channel 72, which in the embodiment shown in Figure 5 extends through the first channel 71, and further extends through the lower end 67 of the tubular element 63 and reaches as far as into the lower portion of the teat cup. In the embodiment shown in Figure 5, by creating an underpressure in the milk line connected to the teat cup, the discharge from the teat chamber to the milk line is shut off, because the teat cup lining 69 below the lower end 67 of the tubular element 63 is sucked against the circumference of the second channel 72. Besides, by creating an underpressure in the milk line 69 connected to the teat cup, a cleaning liquid can be sucked through the second channel and be fed through the lower portion of the teat cup and the milk line connected thereto to a milk jar and from there be pumped back to a cleaning liquid supply vessel. The cleaning liquid for the first channel is fed thereto and discharged therefrom in the same manner as in the embodiment shown in Figure 4. Of course, also the connection of the cleaning liquid supply to the tubular element 63, in the embodiment of Figure 5, must be a dual connection, so that separate liquid circuits through the tubular element are possible. This is of importance, as the cleaning liquid, passed through the second channel 72, is preferably formed by warm or hot water without further admixtures, whilst for cleaning the teat chamber, and more in particular the teat cup lining 69, warm water can be used, to which a cleaning agent and/or a disinfecting agent has been added. In the latter case, a final rinse is necessary to remove cleaning agent and/or disinfecting agent residues. After cleaning or final-rinsing, warm air can be blown through the lines, i.e. through both the channel 71 and the channel 72.

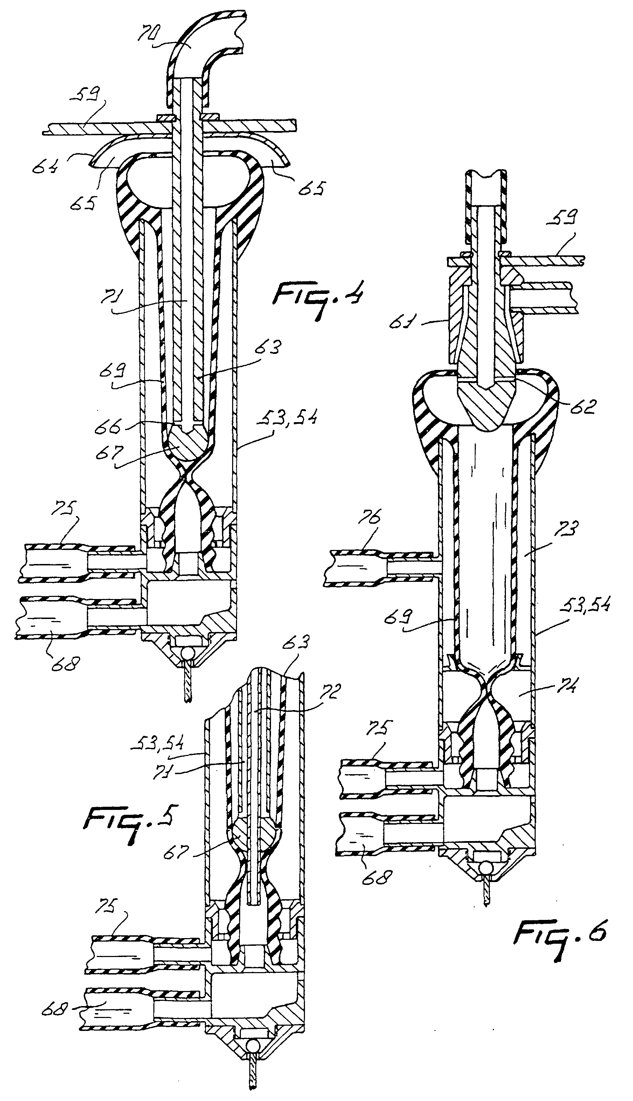

It is possible to omit the cleaning member 58 entirely and to realize the cleaning of the teat cups and the milk circuit connected thereto or the cleaning of only the teat cups by the sole use of the known per se washing member 57. Use must then be made, however of a special type of teat cup. Such a teat cup is shown in Figure 6. The characterizing feature of this teat cup, compared to the known teat cups, is that a plurality, more in particular two mutually separated chambers 73 and 74 are present, whilst in at least one of these chambers, preferably in the chamber 74, an alternating underpressure can be produced. The first chamber 73 is mainly located around that portion of the teat chamber in which a teat of an animal to be milked, inserted therein, extends, whereas the second chamber 74 is mainly located around that portion of the teat chamber into which a teat, inserted therein, does not extend. The chamber 74 is smaller than the chamber 73. Preferably, also the teat cup lining which separates the chamber 74 from the teat chamber is made of a more flexible material than that portion of the teat cup lining which separates the chamber 73 from the teat chamber. This, together with the fact that the chamber 74 is considerably smaller, renders it possible to shut off the discharge from the teat chamber to the milk line 68 connected to the teat cup by means of an advantageously chosen difference in pressure between, on the one hand, the pressure in the chamber 74 and, on the other, the pressure in the milk line 68 connected to the teat cup. Such a teat cup requires, however, a dual connection for producing the desired pressure in each of the chambers 73, 74; consequently, in addition to the customary connection 75 of the type also included in the embodiments shown in Figures 4 and 5, there is provided a second connection 76. The pressure in the two chambers 73 and 74, as well as the pressure in the milk line 68 connected to the teat cup can be controlled independently of each other.

The use of a teat cup of the type shown in Figure 6, having two mutually separate chambers 73, 74 around the teat chamber, has several advantages. The use of such teat cups renders connecting of the teat cups to the teats of an animal to be milked a lot more agreeable to the animal; this also holds for the milking operation itself, as hereby it is possible to reduce the pressure on the teats, more in particular during the idle stroke. In addition, such a teat cup can be used to clean, whilst employing the washing member 57, optionally either the entire teat cup and the milk circuit connected thereto, or solely the teat chamber of the teat cup itself, because by means of the second chamber 74 a separate shut-off feature is created at the lower end of the teat cup.

When a dual-chamber teat cup of this type is used in the automatic milking implement, connecting of such a teat cup will proceed in the following stages, which for that matter rapidly merge into each other:
- In a first stage, a teat cup is raised and pushed around the teat with the aid of the milking robot 8, whilst via the milk line air is sucked from the outside through the teat chamber, and as a result thereof the teat is sucked into the cup. In the upper chamber 73 e.g. an underpressure has been produced to give the teats adequate room, since, as long as the teat chamber has not yet been shut off, an atmospheric pressure remains in the teat chamber, in spite of the air suction. In this first stage, the lower chamber may be kept at atmospheric pressure.
- A second stage is initiated when the teat has been sucked that far into the teat chamber that the pressure in the teat chamber decreases to a predetermined underpressure value. This is the value of the pressure produced in the milk jar and in the milk lines connected to the teat cups. In this second stage, a pressure is preserved in the lower chamber 74, preferably an atmospheric pressure, which effects that the teat cup is closed near its lower end. In this situation, the upper chamber 73 can be kept at atmospheric pressure, although, with the object of relieving the teat to some extent, a slight underpressure may alternatively be produced therein. Since the teat cup is closed at its lower end, the cup is somewhat braked down in its upward motion, so that the teat is loaded to a lesser extent.
- In a third stage, the pressure in the lower chamber 74 is made substantially equal to that in the milk line connected to the teat cup, whilst the pressure in the upper chamber 73 is kept at atmospheric pressure. This causes the teat to be sucked farther into the teat cup, the teat cup then being in the connected state.

As soon as the teat cup has been connected, the milking proper can be started. During milking, i.e. during the suction stroke, an underpressure is maintained in the two chambers 73, 74, the value of which approximately corresponds to the underpressure in the milk line connected to the teat cup, whereas during the idle stroke the lower chamber 74 is kept at atmospheric pressure and the upper chamber 73 either at atmospheric pressure, or, to which preference should be given, is kept at a slight underpressure to reduce the load on the teat during this idle stroke.

For the control of the pressure in more specifically the upper chamber 73, the type of robot used is of importance. When there is used a robot arm which, after the teat cups have been connected, is removed or retracted, so that the teat cups must remain suspended from the teats, then a relatively higher pressure will be produced in the upper chamber 73 than would be the case when the robot arm permanently supports the teat cups during milking.

The use of teat cups of this type can further be utilized to the advantage of the animal to be milked when the pressure in the separate chambers 73, 74 and in the milk lines connected to the teat cup is preset for each animal or, even better, for each udder quarter. Since more in particular the circumference of the teats may differ per animal, it is possible, by applying the appropriate pressure in the several chambers, to obtain an optimum adaptation to the animal and at the same time to effect an optimum milk production.

As has already been stated in the foregoing, the type of teat cup provided with two separate chambers can be used advantageously for optionally cleaning either the entire teat cup and the milk circuit connected thereto, or solely the teat chamber of the teat cup itself. This latter situation is shown in Figure 6. The teat cup is then connected to a spray head 61 of the washing member 57. A cleaning liquid is sprayed into the teat cup via this spray head 61, whilst the lower chamber 74 is kept at atmospheric pressure and in the upper chamber 73 as well as in the milk line 68 connected to the teat cup an underpressure is produced, so that the teat cup lining which separates the lower chamber 74 from the teat chamber closes the discharge from the teat chamber to the milk line connected to the teat cup. The cleaning liquid passed into the teat chamber then has no other option than to leave the teat cup at the upper side. In addition to the spray head 61 of the washing member 57, it is, of course, possible to insert also the tubular element 63 of the embodiments shown in Figures 4 and 5 into the teat cup; the length of the tubular element 63 will then have to correspond to or be slightly less than the length of the upper chamber 73.

It should further be noted that the entire implement for automatic milking is under the control of a computer, i.e. that not only the milking robot 8 is computer-controlled, but that also the entire milking procedure itself is controlled by a computer. More in particular, regulating the pressure in the pulsation chamber of the teat cup shown in Figures 4 and 5 or in the two chambers of the teat cup shown in Figure 6, and also the pressure in the milk line connected to the teat cups is controlled by the computer. This provides the possibility to bring the value of the pressure in the various chambers in harmony with the individual animals and more specifically with the individual udder quarters. Thus, when e.g. an udder quarter has been infected by mastitis, the value of the pressure in the various chambers will have to be chosen such that the teat is loaded to the lowest possible extent. On the other hand, when e.g. the milk flow of a given animal is higher than that of other animals, the underpressure in the milk line connected to the teat cup can be adapted to this higher milk yield. The pressure in the various chambers of the teat cups and in the lines connected to the teat cups can also be influenced by the course of the lactation period or by the milking time elapsed since an individual milking turn. So as to render it possible to adjust the pressure in the separate chambers of the teat cup and the milk line connected thereto to the individual animals and optionally to the individual udder quarters, it is of importance to update the milk yield and the physical circumstances of the animal such as they were found in previous milking runs. Especially these historical data provide an appropriate point of departure to enable the best possible presetting of the circumstances in which an animal is milked, which circumstances are determined by the values of the pressure in the various chambers of the teat cup and the milk line connected thereto.

The invention is not limited to the embodiments described here, but also relates to all kinds of modifications therein, of course, insofar as they are within the scope of the following claims.

## Claims

1. A method of cleaning the teat cups of an implement for automatically milking animals, **characterized in that**, with the object of cleaning a teat cup, a cleaning liquid is fed into the teat chamber of a teat cup, whilst the discharge means from the teat chamber to the milk line connected to the teat cup is shut off.

2. A method as claimed in claim 1, **characterized in that** the cleaning liquid is fed into the teat chamber by inserting a tubular element, having one or a plurality of apertures, into the teat chamber.

3. A method as claimed in claim 2, **characterized in that** the apertures are provided in the tubular element in such a position that the cleaning liquid is fed into the teat chamber at a distance from the upper end of the teat cup which exceeds the normally to be expected insertion depth of the teats of the animals to be milked.

4. A method as claimed in any one of claims 1 to 3, **characterized in that** that end of the tubular element to be inserted into a teat cup is of such a shape that, by applying an underpressure in the milk line connected to the teat cup, the discharge from the teat chamber to the milk line is shut off by that portion of the teat cup lining that is located under said end of the tubular element and the cleaning liquid fed through the tubular element is forced to the open end of the teat cup between the outer wall of the tubular element and that portion of the teat cup lining that contacts the teats.

5. A method as claimed in any one of claims 2 to 4, **characterized in that** also a cleaning liquid is fed via the tubular element into the lower end of the teat cup and the milk line connected thereto.

6. A method as claimed in any one of claims 1 to 4, **characterized in that**, when a teat cup has two mutually separated chambers located around the teat chamber, whilst an alternating underpressure can be applied in one or in both chambers, then the teat chamber is shut off by means of a difference between the pressure in the milk line connected to the teat cup and the pressure in the chamber located nearest thereto.

7. A method as claimed in any one of claims 1 to 3, **characterized in that**, by applying an overpressure in the milk line connected to the teat cup, the cleaning liquid fed into the teat chamber is forced to the open end of the teat cup.

8. A method as claimed in any one of claims 1 to 7, **characterized in that** the cleaning liquid is formed by heated water, preferably having a temperature above 70°C.

9. A method as claimed in any one of claims 1 to 7, **characterized in that** the cleaning liquid is formed by warm water, preferably having a temperature of 30 to 50°C, to which a cleaning agent and/or a disinfectant has been added, the teat cup being subjected to a final wash via the tubular element after having been cleaned by means of this liquid.

10. A method as claimed in any one of the preceding claims, **characterized in that**, after a cleaning liquid has been forced through the chamber between the outer wall of the tubular element and that portion of the teat cup lining that contacts the teats, air is blown through this chamber via the tubular element.

11. A method as claimed in any one of the preceding claims, **characterized in that** the teat cups are connected to a relevant tubular element by moving a robot arm structure, which acts as a carrier for the teat cups, towards a carrier for the tubular elements or by moving a robot arm structure, which acts as a carrier for the tubular elements, towards a carrier for the teat cups.

12. An implement for automatically milking animals, such as cows, comprising a milking robot (8) having a robot arm structure (31) which acts as a support for the teat cups (53, 54), with the aid of which milking robot (8) the teat cups (53, 54) can automatically be connected to the teats of the animals to be milked, as well as a washing member (57) with spray heads (61) for spraying a cleaning liquid into the teat cups (53, 54), **characterized in that**, between the teat cup wall and the teat cup lining (69), a teat cup includes two mutually separated chambers (73, 74) located around the teat chamber, it being possible to apply an alternating underpressure in one or in both chambers (73, 74), whilst, when only the teat chamber of the teat cup (53, 54) is to be cleaned, a difference can be produced between the pressure in the milk line (68) connected to the teat cup (53, 54) and the pressure in the chamber (74) located nearest thereto, which difference is such that the discharge from the teat chamber to the milk line (68) is shut off.

## Patentansprüche

1. Verfahren zum Reinigen der Zitzenbecher eines Gerätes zum automatischen Melken von Tieren,
**dadurch gekennzeichnet, daß** zum Reinigen eines Zitzenbechers eine Reinigungsflüssigkeit in den Zitzenraum eines Zitzenbechers eingeleitet wird, wobei die Auslaßvorrichtung des Zitzenraumes zu der an den Zitzenbecher angeschlossenen Milchleitung geschlossen ist.

2. Verfahren nach Anspruch 1,
**dadurch gekennzeichnet, daß** die Reinigungsflüssigkeit in den Zitzenraum durch Einsetzen eines eine oder mehrere Öffnungen aufweisenden, rohrförmigen Elementes in den Zitzenraum eingeleitet wird.

3. Verfahren nach Anspruch 2,
**dadurch gekennzeichnet, daß** die Öffnungen in dem rohrförmigen Element in einer solchen Position angeordnet sind, daß die Reinigungsflüssigkeit in den Zitzenraum in einem Abstand vom oberen Ende des Zitzenbechers eingeleitet wird, der größer ist als die normalerweise zu erwartende Einstecktiefe der zitzen der zu melkenden Tiere.

4. Verfahren nach einem der Ansprüche 1 bis 3,
**dadurch gekennzeichnet, daß** das in einen Zitzenbecher einzusetzende Ende des rohrförmigen Elementes derart geformt ist, daß durch Erzeugen eines Unterdruckes in der an den Zitzenbecher angeschlossenen Milchleitung der Abfluß aus dem Zitzenraum in die Milchleitung durch denjenigen Teil der Zitzenbecherauskleidung verschlossen ist, der unter dem Ende des rohrförmigen Elementes angeordnet ist, und daß die durch das rohrförmige Element zugeführte Reinigungsflüssigkeit zwischen der Außenwand des rohrförmigen Elementes und dem mit den Zitzen in Kontakt stehenden Teil der Zitzenbecherauskleidung zum offenen Ende des Zitzenbechers gedrückt wird.

5. Verfahren nach einem der Ansprüche 2 bis 4,
**dadurch gekennzeichnet, daß** über das rohrförmige Element eine Reinigungsflüssigkeit auch in das untere Ende des Zitzenbechers und in die daran angeschlossene Milchleitung eingeleitet wird.

6. Verfahren nach einem der Ansprüche 1 bis 4,
**dadurch gekennzeichnet, daß** der Zitzenraum mit Hilfe eines Druckunterschiedes zwischen dem Druck in der an den Zitzenbecher angeschlossenen Milchleitung und dem Druck in der nächstgelegenen Kammer verschlossen wird, wenn ein Zitzenbecher zwei voneinander getrennte Kammern aufweist, die um den Zitzenraum herum angeordnet sind, wobei in einer oder in beiden Kammern ein wechselnder Unterdruck erzeugbar ist.

7. Verfahren nach einem der Ansprüche 1 bis 3,
**dadurch gekennzeichnet, daß** durch Erzeugen eines Überdruckes in der an den Zitzenbecher angeschlossenen Milchleitung die in den Zitzenraum eingeleitete Reinigungsflüssigkeit zum offenen Ende des Zitzenbechers gedrückt wird.

8. Verfahren nach einem der Ansprüche 1 bis 7,
**dadurch gekennzeichnet, daß** die Reinigungsflüssigkeit aus erhitztem Wasser besteht, das vorzugsweise eine Temperatur von mehr als 70°C hat.

9. Verfahren nach einem der Ansprüche 1 bis 7,
**dadurch gekennzeichnet, daß** die Reinigungsflüssigkeit aus warmem Wasser besteht, das vorzugsweise eine Temperatur von 30 bis 50°C hat, und dem ein Reinigungsmittel und/oder ein Desinfektionsmittel zugesetzt wurde, wobei der Zitzenbecher nach dem Reinigen mittels dieser Flüssigkeit einem abschließenden Waschvorgang durch das rohrförmige Element unterzogen wird.

10. Verfahren nach einem der vorhergehenden Ansprüche,
**dadurch gekennzeichnet, daß** nach dem Einpressen einer Reinigungsflüssigkeit in den Raum zwischen der Außenwand des rohrförmigen Elementes und dem mit den Zitzen in Kontakt stehenden Teil der Zitzenbecherauskleidung über das rohrförmige Element Luft durch diesen Raum geblasen wird.

11. Verfahren nach einem der vorhergehenden Ansprüche,
**dadurch gekennzeichnet, daß** die Zitzenbecher mit einem jeweiligen rohrförmigen Element dadurch verbunden werden, daß eine als Träger für die Zitzenbecher dienende Roboterarm-Konstruktion zu einem Träger für die rohrförmigen Elemente bewegt wird, oder daß eine als Träger für die rohrförmigen Elemente dienende Roboterarm-Konstruktion zu einem Träger für die Zitzenbecher bewegt wird.

12. Gerät zum automatischen Melken von Tieren, wie z. B. Kühen, das einen Melkroboter (8) mit einer Roboterarm-Konstruktion (31) umfaßt, welche als Träger für die Zitzenbecher (53, 54) dient, wobei die Zitzenbecher (53, 54) mit Hilfe des Melkroboters (8) automatisch an die Zitzen der zu melkenden Tiere anschließbar sind, sowie mit einem Waschelement (57) mit Sprühköpfen (61) zum Einsprühen einer Reinigungsflüssigkeit in die Zitzenbecher (53, 54),
**dadurch gekennzeichnet, daß** ein Zitzenbecher zwischen der Zitzenbecherwand und der Zitzenbecherauskleidung (69) zwei voneinander getrennte Kammern (73, 74) aufweist, die um den Zitzenraum herum angeordnet sind, wobei die Möglichkeit besteht, in einer oder in beiden Kammern (73, 74) einen wechselnden Unterdruck zu erzeugen, wobei bei Reinigung nur des Zitzenraumes des Zitzenbechers (53, 54) ein Druckunterschied zu erzeugen ist zwischen dem Druck in der Milchleitung (68), die an den Zitzenbecher (53, 54) angeschlossen ist, und dem Druck in der nächstgelegenen Kammer (74), wobei der Druckunterschied so gewählt ist, daß der Abfluß aus dem Zitzenraum in die Milchleitung (68) geschlossen ist.

## Revendications

1. Procédé pour nettoyer les manchons trayeurs d'un dispositif pour traire automatiquement les animaux, **caractérisé en ce que**, dans l'objet de nettoyer un manchon trayeur, un liquide de nettoyage est délivré à l'intérieur de la chambre trayeuse d'un manchon trayeur, tandis que les moyens d'évacuation depuis la chambre trayeuse vers le lactoduc relié au manchon trayeur sont mis hors service.

2. Procédé selon la revendication 1, **caractérisé en ce que** le liquide de nettoyage est délivré à l'intérieur de la chambre trayeuse en insérant un élément tubulaire, présentant une ou une pluralité d'ouvertures, à l'intérieur de la chambre trayeuse.

3. Procédé selon la revendication 2, **caractérisé en ce que** les ouvertures sont prévues dans l'élément tubulaire dans une position telle que le liquide de nettoyage est délivré à l'intérieur de la chambre trayeuse à une distance de l'extrémité supérieure du manchon trayeur qui dépasse la profondeur d'insertion normalement attendue des trayons des animaux à traire.

4. Procédé selon l'une quelconque des revendications 1 à 3, **caractérisé en ce que** cette extrémité de l'élément tubulaire devant être inséré dans un manchon trayeur est d'une forme telle que, en appliquant une sous-pression dans le lactoduc relié au manchon trayeur, l'évacuation depuis la chambre trayeuse vers le lactoduc est mise hors service par cette partie du revêtement du manchon trayeur qui est située sous ladite extrémité de l'élément tubulaire et le liquide de nettoyage délivré à travers l'élément tubulaire est forcé vers l'extrémité ouverte du manchon trayeur entre la paroi extérieure de l'élément tubulaire et cette partie du revêtement du manchon trayeur qui est en contact avec les trayons.

5. Procédé selon l'une quelconque des revendications 2 à 4, **caractérisé en ce qu'**un liquide de nettoyage est également délivré par l'intermédiaire de l'élément tubulaire dans l'extrémité inférieure du manchon trayeur et du lactoduc relié à celui-ci.

6. Procédé selon l'une quelconque des revendications 1 à 4, **caractérisé en ce que**, quand un manchon trayeur présente deux chambres mutuellement séparées situées autour de la chambre trayeuse, tandis qu'une sous-pression alternative peut être appliquée dans une ou dans les deux chambres, alors la chambre trayeuse est mise hors service au moyen d'une différence entre la pression dans le lactoduc relié au manchon trayeur et la pression dans la chambre située la plus proche de celui-ci.

7. Procédé selon l'une quelconque des revendications 1 à 3, **caractérisé en ce que**, en appliquant une surpression dans le lactoduc relié au manchon trayeur, le liquide de nettoyage délivré à l'intérieur de la chambre trayeuse est forcé vers l'extrémité ouverte du manchon trayeur.

8. Procédé selon l'une quelconque des revendications 1 à 7, **caractérisé en ce que** le liquide de nettoyage est composé d'eau chauffée, ayant de préférence une température supérieure à 70 °C.

9. Procédé selon l'une quelconque des revendications 1 à 7, **caractérisé en ce que** le liquide de nettoyage est composé d'eau chaude, ayant de préférence une température de 30 à 50 °C, à laquelle un agent nettoyant et/ou un désinfectant a été ajouté, le manchon trayeur étant soumis à un lavage final par l'intermédiaire de l'élément tubulaire après avoir été nettoyé au moyen de ce liquide.

10. Procédé selon l'une quelconque des revendications précédentes, **caractérisé en ce que**, après qu'un liquide de nettoyage a été forcé à travers la chambre entre la paroi extérieure de l'élément tubulaire et cette partie du revêtement du manchon trayeur qui est en contact avec les trayons, de l'air est soufflé à travers cette chambre par l'intermédiaire de l'élément tubulaire.

11. Procédé selon l'une quelconque des revendications précédentes, **caractérisé en ce que** les manchons trayeurs sont reliés à un élément tubulaire approprié en déplaçant une structure à bras robotisé, qui agit comme un support pour les manchons trayeurs, vers un support pour les éléments tubulaires ou en déplaçant une structure à bras robotisé, qui agit comme un support pour les éléments tubulaires, vers un support pour les manchons trayeurs.

12. Dispositif pour traire automatiquement les animaux, comme les vaches, comprenant un robot de traite (8) présentant une structure à bras robotisé (31) qui agit comme un support pour les manchons trayeurs (53, 54), avec l'aide duquel robot de traite (8) les manchons trayeurs (53, 54) peuvent être automatiquement reliés aux trayons des animaux à traire, de même qu'un élément de lavage (57) avec des têtes de vaporisation (61) pour vaporiser un liquide de nettoyage à l'intérieur des manchons trayeurs (53, 54), **caractérisé en ce que**, entre la paroi du manchon trayeur et le revêtement du manchon trayeur (69), un manchon trayeur comprend deux chambres mutuellement séparées (73, 74) situées autour de la chambre trayeuse, étant possible d'appliquer une sous-pression alternative dans une ou dans les deux chambres (73, 74), tandis que, quand seule la chambre trayeuse du manchon trayeur (53, 54) doit être nettoyée, une différence peut se produire entre la pression dans le lactoduc (68) relié au manchon trayeur (53, 54) et la pression dans la chambre (74) située la plus proche de celui-ci, laquelle différence est telle que l'évacuation depuis la chambre trayeuse vers le lactoduc (68) est mise hors service.
